# EUROPÄISCHE PATENTANMELDUNG

(11) **EP 4 383 212 A1**
(43) Veröffentlichungstag der Anmeldung: **12.06.2024**
(21) Anmeldenummer: 23214585.4
(22) Anmeldetag: 06.12.2023
(51) Int. Cl.: G06V 10/82, G06V 10/94, G06V 10/96, G06V 20/64, G06V 40/10

(54) **AUTHENTIFIZIERUNGSVORRICHTUNG UND VERFAHREN ZUM AUTHENTIFIZIEREN EINER PERSON ANHAND EINES DER PERSON ZUGEORDNETEN IDENTIFIKATIONSDOKUMENTES SOWIE IDENTITÄTSDOKUMENT UND VERFAHREN ZUM HERSTELLEN**

(30) Priorität: 06.12.2022 DE 102022132343
(71) Anmelder: Bundesdruckerei GmbH, 10969 Berlin (DE)
(72) Erfinder: Peters, Dr. Florian, 10437 Berlin (DE); Margraf, Valentin, 10367 Berlin (DE)
(74) Vertreter: Bittner, Thomas L.

(57) **Zusammenfassung**

Die vorliegende Offenbarung betrifft eine Authentifizierungsvorrichtung (200) zum Authentifizieren einer Person (103) anhand eines Identifikationsdokumentes (100), welches einen Speicherbereich (110) aufweist, in welchem ein Referenzmerkmalssatz (101) gespeichert ist, der digitale Referenzmerkmale (107) eines digitalen Referenzkopfmodells aufweist, wobei der Referenzmerkmalssatz (101) eine Antwort (212) unter Verwendung eines trainierten neuronalen Netzes (205) umfasst, mit: einer Bildaufnahmeeinrichtung (201), welche ausgebildet ist, ein Kopfbild (202) der Person aufzunehmen; einem Prozessor (203), welcher ausgebildet ist, ein digitales Vergleichskopfmodell (204) anhand des aufgenommenen Kopfbildes der Person zu erzeugen, anhand des digitalen Vergleichskopfmodells (204) einen Vergleichsmerkmalssatz (206) mit digitalen Vergleichsmerkmalen (207) als eine Antwort (210) des trainierten neuronalen Netzes bereitzustellen, und ferner einen Unterschied (208) zwischen den digitalen Referenzmerkmalen und den digitalen Vergleichsmerkmalen zu bestimmen, um die Person zu authentifizieren. (Fig. 1)

## Beschreibung

Die Erfindung betrifft eine Authentifizierungsvorrichtung und ein Verfahren zum Authentifizieren einer Person anhand eines der Person zugeordneten Identifikationsdokumentes (ID-Dokument) sowie ein Identitätsdokument und ein Verfahren zum Herstellen. Die Erfindung bezieht sich auf das Gebiet der Personenidentifikation, beispielsweise bei Grenzkontrollsystemen, anhand eines Identifikationsdokuments, wie zum Beispiel einem Reisepass oder einem Personalausweis.

### Hintergrund

Zur Erstellung eines Identifikationsdokuments einer Person werden Daten der Person, vorzugsweise der Kopf, mittels einer Kamera erfasst. Diese Daten werden in dem ID-Dokument gespeichert, zum Beispiel einem Reisepass, einem Personalausweis oder in einer CLOUD. Zur Kontrolle der Person anhand des ID-Dokuments werden die in dem ID-Dokument gespeicherten Daten dann mit einem live aufgenommenen Datensatz verglichen, der zum Beispiel von einem Smartphone aufgenommen wurde, um damit die Identität des Dokumentenhalters zu verifizieren.

Hiermit verbunden sind jedoch einige Nachteile: So liegen die Daten (nach Entschlüsselung) im Klartext auf dem Rechner des Smartphones vor. Die Daten des ID-Dokuments müssen 1:1 verglichen werden gegen die Daten, die live aufgenommen werden, was eine mitunter große Datenmenge bedeutet, die zweimal gelesen und dann verglichen werden muss. Die Daten des ID-Dokuments müssen außerdem von dem ID-Dokument eingelesen werden und sind somit in einem Bereich des Smartphones der nicht sicher ist. Behörden, die die Daten aus dem ID Dokument auslesen dürfen, können ebenfalls kompromittiert werden, was einen Verlust der Rohdaten zur Folge haben kann. Die Daten selber sind personenbezogene Daten und lassen Rückschlüsse auf die Person zu. Außerdem ist die Datenmenge sehr groß und schwierig auf einem Chip zu speichern.

Das Dokument DE 102021 109 370 A1 offenbart ein Verfahren zum Identifizieren einer Person anhand eines biometrischen Gesichtsmerkmals mit Hilfe eines mobilen Geräts. Es wird ein ID-Dokument mit einem Speicher für elektronische Daten bereitgestellt, wobei in dem Speicher eine Datenmengen zum Personalisieren des ID-Dokuments gespeichert ist: Bei der Datenmenge kann es sich um Referenzwertdaten handeln, welche einen Referenzwert für eine geometrische Beziehung für wenigstens zwei Landmarken der Gesichtserkennung in einem dreidimensionalen Referenzmodell für das Gesicht der Person anzeigen. Zum Identifizieren einer Person wird der Referenzwert dann mit einem Vergleichswert verglichen, welcher in Form von Vergleichswertdaten aus einem aktuellen dreidimensionalen Modell für das Gesicht der Person bestimm wurde, welches wiederum aus mit einer Bildaufnahmeeinrichtung des mobilien Geräts aufgenommenen aktuellen Bilddaten für das Gesicht bestimmt wurden.

Das Dokument DE 10 2017 106 855 A1 betrifft ein Verfahren zum Bereitstellen einer Biometriegestützten Objektbindung, das ein Zugreifen auf biometrische Merkmale eines Individuums, ein zufälliges Wählen einer algebraischen Instanz, ein Erzeugen eines gesicherten Abbilds der algebraischen Instanz, ein Berechnen von Verifikationsdaten basierend auf den biometrischen Merlanalen und der algebraischen Instanz und ein Verknüpfen eines Objekts mit dem gesicherten Abbild der algebraischen Instanz und den Verifikationsdaten umfasst, um das Objekt an das Individuum zu binden.

### Zusammenfassung

Aufgabe der Erfindung ist es, eine verbesserte Technologie zum sicheren Identifizieren einer Person anhand eines Identifikationsdokuments anzugeben.

Die Aufgabe wird gelöst durch eine Authentifizierungsvorrichtung und ein Verfahren zum Authentifizieren einer Person anhand eines Identifikationsdokumentes nach den unabhängigen Ansprüchen 1 und 13. Weiterhin sind ein Identitätsdokument und ein Verfahren zum Herstellen nach den nebengeordneten Ansprüchen 14 und 15 geschaffen. Weitere Ausgestaltungen sind Gegenstand der abhängigen Ansprüche.

Nach einem Aspekt ist eine Authentifizierungsvorrichtung zum Authentifizieren einer Person anhand eines der Person zugeordneten Identifikationsdokumentes geschaffen, wobei in einem dem Identifikationsdokument zugeordneten elektronischen Speicher ein Referenzmerkmalssatz gespeichert ist; und der Referenzmerkmalssatz digitale Referenzmerkmale eines digitalen Referenzkopfmodells aufweist, welches ein Referenzkopfbild der Person repräsentiert, und die digitalen Referenzmerkmale veränderte Referenzantwortdaten umfassen, die ausgehend von Referenzantwortdaten, einer Änderungsvorschrift entsprechend, gebildet und von den Referenzantwortdaten verschieden sind, wobei die Referenzantwortdaten eine Referenzantwort eines trainierten neuronalen Netzes anzeigen, das durch einen Referenzparametersatz definiert ist. Die Authentifizierungsvorrichtung weist eine Bildaufnahmeeinrichtung, welche eingerichtet ist, ein Kopfbild der Person aufzunehmen, und einen Prozessor auf, welcher für Folgendes eingerichtet ist: ein digitales Vergleichskopfmodell zu bestimmen, welches das aufgenommene Kopfbild der Person repräsentiert; anhand des digitalen Vergleichskopfmodells einen Vergleichsmerkmalssatz zu bestimmen, welcher digitale Vergleichsmerkmale des Vergleichskopfmodells umfasst; die digitalen Vergleichsmerkmale veränderte Vergleichsantwortdaten aufweisend zu bestimmen, welche ausgehend von Vergleichsantwortdaten, der Änderungsvorschrift entsprechend, gebildet und von den Vergleichsantwortdaten verschieden sind, wobei die Vergleichsantwortdaten eine Vergleichsantwort des trainierten neuronalen Netzes anzeigen; und einen Unterschied zwischen den digitalen Referenzmerkmalen und den digitalen Vergleichsmerkmalen unter Berücksichtigung der veränderten Referenzantwortdaten und der veränderten Vergleichsantwortdaten zu bestimmen, um die Person zu authentifizieren.

Nach einem weiteren Aspekt ist ein Verfahren zum Authentifizieren einer Person mittels einer Authentifizierungsvorrichtung anhand eines Identifikationsdokumentes geschaffen. Das Verfahren umfasst Folgendes: Bereitstellen eines Identifikationsdokumentes, welches einer Person zugeordnet ist; Bereitstellen eines Referenzmerkmalssatzes in einem elektronischen Speicher, welcher dem Identifikationsdokument zugeordnet ist, wobei der Referenzmerkmalssatz digitale Referenzmerkmale eines digitalen Referenzkopfmodells aufweist, welches ein Referenzkopfbild der Person repräsentiert, und die digitalen Referenzmerkmale veränderte Referenzantwortdaten umfassen, die ausgehend von Referenzantwortdaten, einer Änderungsvorschrift entsprechend, gebildet und von den Referenzantwortdaten verschieden sind, wobei die Referenzantwortdaten eine Referenzantwort eines trainierten neuronalen Netzes anzeigen, das durch einen Referenzparametersatz definiert ist; und Aufnehmen eines Kopfbildes der Person mittels einer Bildaufnahmeeinrichtung. Ein Prozessor der Authentifizierungsvorrichtung ist für Folgendes eingerichtet: Bestimmen eines digitalen Vergleichskopfmodell, welches das aufgenommene Kopfbild der Person repräsentiert; Bestimmen, anhand des digitalen Vergleichskopfmodells, eines Vergleichsmerkmalssatzes, welcher digitale Vergleichsmerkmale des Vergleichskopfmodells umfasst; Bestimmen der digitalen Vergleichsmerkmale, die veränderte Vergleichsantwortdaten aufweisen, welche ausgehend von Vergleichsantwortdaten, der Änderungsvorschrift entsprechend, gebildet und von den Vergleichsantwortdaten verschieden sind, wobei die Vergleichsantwortdaten eine Vergleichsantwort des trainierten neuronalen Netzes anzeigen; und Bestimmen eines Unterschieds zwischen den digitalen Referenzmerkmalen und den digitalen Vergleichsmerkmalen unter Berücksichtigung der veränderten Referenzantwortdaten und der veränderten Vergleichsantwortdaten, um die Person zu authentifizieren.

Nach einem anderen Aspekt ist ein Identifikationsdokument zum Identifizieren einer Person geschaffen, welches Folgendes aufweist: einen elektronischen Speicher, aufweisend einen Referenzmerkmalssatz mit digitalen Referenzmerkmale eines digitalen Referenzkopfmodells, welches ein Referenzkopfbild der Person repräsentiert, wobei die digitalen Referenzmerkmale veränderte Referenzantwortdaten umfassen, die ausgehend von Referenzantwortdaten, einer Änderungsvorschrift entsprechend, gebildet und von den Referenzantwortdaten verschieden sind, wobei die Referenzantwortdaten eine Referenzantwort eines trainierten neuronalen Netzes anzeigen, das durch einen Referenzparametersatz definiert ist; und eine Kommunikationsschnittstelle, welche eingerichtet ist, die digitalen Referenzmerkmale ansprechend auf den Empfang eines Auslesesignals auszugeben.

Weiterhin ist ein Verfahren zum Herstellen eines Identifikationsdokumentes geschaffen, welches einer Person zugeordnet ist, wobei das Verfahren Folgendes aufweist: Aufnehmen eines Referenzkopfbildes der Person; Erzeugen eines digitalen Referenzkopfmodells anhand des Referenzkopfbildes der Person, wobei das digitale Referenzkopfmodell das Referenzkopfbild der Person repräsentiert; und Ausführen eines neuronalen Netzes, um einen Referenzmerkmalssatz bestimmen, wobei der Referenzmerkmalssatz digitale Referenzmerkmale des digitalen Referenzkopfmodells aufweist und das neuronale Netz durch einen Referenzparametersatz definiert ist, und wobei die digitalen Referenzmerkmale veränderte Referenzantwortdaten umfassen, die ausgehend von Referenzantwortdaten, einer Änderungsvorschrift entsprechend, gebildet und von den Referenzantwortdaten verschieden sind, wobei die Referenzantwortdaten eine Referenzantwort des trainierten neuronalen Netzes (205) anzeigen.

Die Authentifizierungsvorrichtung bietet den Vorteil, dass das mit dem digitalen Referenzkopfmodell trainierte neuronale Netz, welches auch als KI-Modell bezeichnet werden kann, bzw. der Code dazu öffentlich verfügbar ist, so dass das das KI-Modell jedem bekannt ist und von jeder Prüfstelle eine Authentifikation der Person auf einfache und effiziente Art und Weise vorgenommen werden kann. Der Vergleichsmerkmalssatz mit den digitalen Vergleichsmerkmalen liefert dazu weit weniger Daten als die originalen Bilddaten des Kopfbildes, die beispielsweise als 3D Bilddaten vorliegen. Der Vergleichsmerkmalssatz kann beispielsweise aus lediglich 128 Daten, beispielsweise 128 Byte bestehen.

Der Vergleich der Daten des Vergleichsmerkmalssatzes mit den Daten des Referenzmerkmalssatzes kann unabhängig vom Algorithmus der KI-Modelle passieren, ist also einfach ausführbar und muss nicht gesondert gesichert werden. Der Referenzmerkmalssatz wird auch als Feature-Vektor bezeichnet. Der Referenzparametersatz stellt charakteristische Einstellungen des neuronalen Netzes dar, wie beispielsweise Gewichte, Funktionen, etc.

Das neuronale Netz, mit dem der Referenzmerkmalssatz bestimmt wurde, kann ein anderes sein als das neuronale Netz, mit dem der Vergleichsmerkmalssatz bestimmt wird, es kann beispielsweise auf einem anderen Computer laufen. Allerdings wurde es mit dem gleichen digitalen Referenzkopfmodell trainiert und es definiert sich durch den gleichen Referenzparametersatz. Das neuronale Netz kann in einem Beispiel ein Faltungs-Neuronales-Netz bzw. Convolutional Neural Network sein.

Die vorliegende Offenbarung basiert in einer Ausgestaltung insbesondere auf der Erkenntnis, dass 3D-Daten in kleinem Umfang auf dem Chip des I D-Dokuments gespeichert werden ohne das Risiko eines Totalverlustes von vertraulichen Informationen. Mit einer einfachen und schlanken Vergleichsmöglichkeit, die live und auf dem Smartphone ermittelt werden kann, ohne die Rohdaten auslesen zu müssen, kann die Person sicher identifiziert werden.

Die Referenzantwortdaten und die Vergleichsantwortdaten können jeweils eine Gruppe von Referenz- / Vergleichsmerkmalen repräsentieren oder anzeigen, aus denen, zum Bestimmen der veränderten Referenzantwortdaten und die Vergleichsantwortdaten, unter Anwendung der Änderungs- oder Verschleierungsvorschrift eine geänderte Gruppe oder ein geänderter Satz von Referenz- / Vergleichsmerkmalen erzeugt wird, welchen dann die veränderten Referenz-/ Vergleichsantwortdaten anzeigen oder repräsentieren.

Ein Aspekt der Offenbarung basiert darauf, in einem ID-Dokument einen Referenzmerkmalssatz mit digitalen Referenzmerkmalen, zum Beispiel abgeleiteten 128 Datenwerten zu speichern, die aus einem KI-Modell, vorzugsweise Neuronalem Netz für 3D Modelle stammen und diese mit live aufgenommenen Werten zu vergleichen, die ebenfalls das gleiche KI (Künstliche Intelligenz)-Modell bzw. Neuronale Netz durchlaufen haben.

Im Sinne der vorliegenden Offenbarung umfasst die Formulierung "Identitätsdokument" insbesondere beliebige Dokumente, die zur Identifikation einer Person geeignet sind, wie Personalausweis oder Reisepass, sowie Identitätsdokumente, welche wahlweise (lediglich) einen Link- oder Zeigerinformation aufweisen, die einen Speicherort oder -platz anzeigt, von dem die Person identifizierende Daten abrufbar gespeichert sind. Dem Identitätsdokument ist der Speicherort oder -platz zugeordnet, während beim Dokument auf diesem selbst ein Speicherberiech für elektronischen Daten vorgesehen sein kann.

Ein ID-Dokument, zum Beispiel ein Reisepass kann so hergestellt werden, dass er diese 128 Datenwerte, zum Beispiel 128 Byte, in einer sogenannten Datengruppe enthält. Dort wird auch die Version des Modells bzw. des Neuronalen Netzes abgelegt. Die Datengruppe kann durch ein Lesegerät, beispielsweise bei einer Grenzkontrolle ausgelesen werden. Die Person wird darauf erneut 3D gescannt, um digitale Vergleichsmerkmale zu erhalten, mit denen das Kl-Modell bzw. das Neuronale Netz durchlaufen wird. Die so erhaltenen Daten werden dann mit dem aus dem ID-Dokument ausgelesenen 128 Datenwerten, zum Beispiel den 128 Byte, verglichen, um die Person zu identifizieren.

Nach einer Ausgestaltung kann Folgendes vorgesehen sein: (i) Es wird ein Neuronales Netz (CNN) trainiert ("Modell"), das aus den 3D Daten, zum Beispiel 128 Werte ermittelt, die sich für den "homo sapiens" in einer maximalen Varianz über alle Versuchspersonen auswirken. Dies kann zum Beispiel erreicht werden, indem als Feedback für das CNN Training die Differenzen, die durch paarweisen Vergleich zwischen Parametern und Menschen entstehen, addiert werden, (ii) Das trainierte Modell wird veröffentlicht, und seine Versionsnummer in den Reisepass bzw. das ID Dokument abgelegt, zum Beispiel in einer öffentlich bekannten Datengruppe (DG NN). (iii) Die live aufgenommenen Daten vom 3D Sensor zum Beispiel des Smartphones werden ebenfalls durch das gleiche KI-Modell prozessiert, und daraus zum Beispiel die 128 oben genannten Datenwerte abgeleitet. Hier dient das öffentliche Modell als Vorschrift der Prüfung durch die Smartphone App. (iv) Diese Bearbeitung kann in einer Ausführungsform im sicheren Umfeld des Smartphones geschehen wahlweise also in der SECURE ENCLAVE oder einer anderen. (v) Der Vergleich mit den Daten des ID Halters findet nur aufgrund der 128 Werte statt, und zwar mittels einer Wahrscheinlichkeitsabschätzung, ob die aufgenommenen Daten dem ID Halter entsprechen, d.h. ob es ein "matching" bzw. eine Übereinstimmung der Daten gibt.

Weiterhin kann für die Authentifizierungsvorrichtung vorgesehen sein, dass Änderungsdaten bereitgestellt sind, welche die Änderungsvorschrift anzeigen; und der Prozessor eingerichtet ist, die Änderungsdaten zu empfangen und die veränderten Vergleichsantwortdaten, ausgehend von Vergleichsantwortdaten, den Änderungsdaten entsprechend zu bestimmen.

Für die Authentifizierungsvorrichtung vorgesehen sein, dass wenigstens eine erste Teilmenge der Änderungsdaten im elektronischen Speicher gespeichert ist; und der Prozessor eingerichtet ist, die wenigstens eine erste Teilmenge nach dem Abrufen aus dem elektronischen Speicher zu empfangen und die veränderten Vergleichsantwortdaten, ausgehend von Vergleichsantwortdaten, den Änderungsdaten entsprechend zu bestimmen.

Der Prozessor kann eingerichtet sein, die wenigstens eine erste Teilmenge der Änderungsdaten in einer Datenanalyse der veränderten Referenzantwortdaten zu bestimmen.

Weiterhin kann für die Authentifizierungsvorrichtung vorgesehen sein, dass wenigstens eine zweite Teilmenge der Änderungsdaten frei von einer vorherigen Speicherung im elektronischen Speicher vom Prozessor empfangbar ist; und der Prozessor eingerichtet ist, die wenigstens eine erste Teilmenge nach dem Abrufen aus dem elektronischen Speicher zu empfangen und die veränderten Vergleichsantwortdaten, ausgehend von Vergleichsantwortdaten, den Änderungsdaten entsprechend zu bestimmen.

Die Änderungsvorschrift kann mindestens eine Datenmanipulation aus der folgenden Gruppe vorsehen: Umsortierung von Daten, Multiplikation von Daten mit mindestens einem Faktor und Addition von Daten. Insbesondere kann vorgesehen sein, die Umsortierung von Daten mit zumindest Multiplikation oder Addition zu kombinieren. Auch kann es zweckmäßig sein, Multiplikation und Addition zu kombinieren, ggf. ohne Umsortierung.

Das digitale Referenzkopfmodell kann ein dreidimensionales digitales Referenzkopfmodell sein, und das digitale Vergleichskopfmodell kann als ein dreidimensionales digitales Vergleichskopfmodell ausgeführt sein. Damit kann der technische Vorteil erreicht werden, dass aufgrund der dreidimensionalen Modelle ausreichend Daten zur Weiterverarbeitung zur Verfügung stehen, um eine Unterscheidung unterschiedlicher Personen voneinander und damit ein gezieltes Erkennen einer bestimmten Person und deren Authentifizierung zu ermöglichen.

Das digitale Referenzkopfmodell und / oder das digitale Vergleichskopfmodell können ein zweidimensionales digitales Tiefenbild mit einem Farbkanal umfassen, welcher eine Tiefeninformation des zweidimensionalen digitales Tiefenbildes bereitstellt. Ein solches zweidimensionales digitales Tiefenbild ist einfach zu verarbeiten ist und kann zugleich alle relevanten Informationen bereitstellen.

Der Prozessor kann eingerichtet sein, die Person zu authentifizieren, wenn der Unterschied einen vorbestimmten Schwellwert unterschreitet und andernfalls die Person nicht zu authentifizieren. Der Person kann die Authentifikation verweigert werden, falls der Unterschied den vorbestimmten Schwellwert überschreitet. Damit ergibt sich eine genaue und weitergehend möglichst fehlerfreie Authentifikation, deren Genauigkeit ferner über den Schwellwert flexibel einstellbar ist.

Die digitalen Referenzmerkmale können als Referenzmerkmalsvektor vorliegen, und die digitalen Vergleichsmerkmale können als Vergleichsmerkmalsvektor vorliegen. Weiterhin kann der Prozessor eingerichtet sein, den Unterschied auf der Basis einer Differenz zwischen dem Referenzmerkmalsvektor und dem Vergleichsmerkmalsvektor zu bestimmen. Der Prozessor kann so zum Beispiel auf übliche Abstandsbestimmungsalgorithmen zugreifen, um den Unterschied zwischen den beiden Vektoren zu bestimmen. Solche Algorithmen sind zum Beispiel in einer Software-Library verfügbar.

Der Prozessor kann eingerichtet sein, einen Differenzvektor zwischen dem Referenzmerkmalsvektor und dem Vergleichsmerkmalsvektor zu bestimmen und hierbei eine Phase des Differenzvektors und / oder einen Betrag des Differenzvektors zu bestimmen. Der Prozessor kann so den Unterschied basierend auf verfügbaren Abstandsmetriken auf einfache Weise bestimmen. Solche Abstandsmetriken können beispielsweise sowohl die Phase als auch den Betrag des Differenzvektors nutzen, um eine geeignete Metrik zu bestimmen. Der Unterschied kann beispielsweise anhand einer Abstandsmetrik zwischen dem Referenzmerkmalsvektor und dem Vergleichsmerkmalsvektor bestimmt werden. Beispielsweise kann die Summe der kleinsten Abstandsquadrate pro Vektorelement bestimmt werden, oder es kann die Summe der gemittelten Abstandswerte bestimmt werden.

Das digitale Referenzkopfmodell kann auf einer Schätzung einer Gesichtsgeometrie der Person basieren und eine dreidimensionale Oberflächengeometrie der Person basierend auf der geschätzten Gesichtsgeometrie unter Verwendung von maschinellem Lernen abbilden. Verfügbare Modelle zur Bestimmung der Gesichtsgeometrie, wie zum Beispiel Google's FaceMesh oder "MediaPipe Face Mesh" auf dem Prozessor als Programmbaustein bzw. App können so eingebunden werden, um das digitale Vergleichskopfmodell schnell und effizient zu bestimmen.

Mit der vorgeschlagenen Technologie können ein oder mehrere der folgenden Vorteile ergeben:
1) Es werden keine unklaren Algorithmen verwendet, der Code ist öffentlich, das KI Modell jedem bekannt.
2) Jedes Smartphone kann KI-Modell Ausgaben berechnen, beispielsweise auf GPUs oder SOCs mit FPGA.
3) Die oben genannten Datenwerte, zum Beispiel 128 Datenwerte, ergeben weit weniger Daten als die orriginalen 3D-Rohdaten.
4) Der Vergleich der Daten kann unabhängig vom Algorithmus des KI-Modells ausgeführt werden, ist also einfach und muss nicht gesondert gesichert werden.
5) Durch das öffentliche Modell kann jeder Sensorhersteller seinen Sensor trainieren bis ein gutes "matching" erreicht ist mit auch mit öffentlichen 3D-Rohdaten (Frau Mustermann) und 128 Werten eines Vergleichsdatensatzes. Zum Beispiel kann der Sensorhersteller den Kopf ausdrucken, seinen Sensor messen lassen und prüfen, ob er unter eine gewisse Zielvergleichsmarke kommt, zum Beispiel eine Fehlertoleranz von 1%*128 in Summe.
6) Durch die Versionierung ist eine Langzeit Update-Fähigeit gegeben, man kann jederzeit das KI Modell austauschen und eine neue Version ins Netz stellen.
7) Die Vertraulichkeit ist höher: Ein Rückrechnen von den oben genannten 128 Datenwerten auf den Input des KI-Modells ist nicht so einfach oder gar unmöglich. Es entsteht zwar auch hier eine hoch-spezifische Kennung pro Mensch, mittels welcher sich der Mensch mit sehr hoher Wahrscheinlichkeit identifizieren lässt, jedoch ist diese nicht unmittelbar auf Feature bzw. Merkmale des Kopfes zurückzurechnen, wie beispielsweise Nasenform, Augenform, Ethnie. Es gibt weniger personenbezogene Daten. Auch kann durch ein "Obfuscating" bzw. Verschleierung eine weitere Verschleierung erfolgen.

Das neuronale Netz kann mit einer Vielzahl von unterschiedlichen digitalen Referenzkopfmodellen trainiert werden, welche eine statistisch hinreichende Auswahl an verschiedenen Personen abbilden, ohne eine Bevorzugung bestimmter Merkmale vorzunehmen. So kann eine ausreichende Stichprobe über verschiedene Personen zur Verfügung stehen, mittels derer sich eine genaue Identifizierung der Personen anhand des trainierten neuronalen Netzes vornehmen lässt. Außerdem treten keine Singularitäten auf, welche die Identifizierung negativ beeinflussen könnten.

Bei der Authentifizierungsvorrichtung kann vorgesehen sein, dass das mit dem digitalen Referenzkopfmodell trainierte neuronale Netz und / oder das digitale Referenzkopfmodell auf einem öffentlich zugänglichen Server abgelegt und von dem öffentlich zugänglichen Server durch die Authentifizierungsvorrichtung abrufbar sind. Mittels des öffentlichen Modells kann jeder Sensorhersteller seinen Sensor trainieren bis ein gutes "matching" erreicht ist mit ebenfalls öffentlichem Referenzmerkmalssatz und Vergleichsmerkmalssatz. Zum Beispiel kann der Sensorhersteller den Kopf ausdrucken, seinen Sensor messen lassen und prüfen, ob er unter eine gewisse Zielvergleichsmarke bezüglich der Fehlertoleranz kommt.

Der Prozessor der Authentifizierungsvorrichtung kann eingerichtet oder ausgebildet sein, ein Computerprogramm auszuführen oder eine Ausführung eines Computerprograms zu initiieren, das das neuronale Netz mit dem Referenzparametersatz implementiert, und die digitalen Vergleichsmerkmale anhand des digitalen Vergleichskopfmodells unter Verwendung des neuronalen Netzes zu erzeugen. Das neuronale Netz lässt sich über das Computerprogramm einfach und effizient bestimmen. Das Computerprogramm kann öffentlich verfügbar gemacht werden, damit jede Kontrollstelle das neuronale Netz auf ihren Bilddaten effizient ausführen kann.

Bei der Authentifizierungsvorrichtung kann vorgesehen sein, dass diese ausgebildet ist, das Computerprogramm, das das neuronale Netz mit dem Referenzparametersatz implementiert, über ein Kommunikationsnetzwerk empfängt, insbesondere abruft. Das neuronale Netz mit dem Referenzparametersatz kann so in Form des Computerprogramms einfach über ein Kommunikationsnetzwerk von einem öffentlichen Server abgerufen werden. Es steht somit allen zur Verfügung und ist an allen Orten weltweit verfügbar.

Bei der Authentifizierungsvorrichtung kann das Computerprogramm in einem kryptographisch gesicherten Hardwarebereich gespeichert sein, und die Authentifizierungsvorrichtung kann eingerichtet sein, das Computerprogramm in dem kryptographisch gesichertem Hardwarebereich auszuführen. So verlassen keine persönlichkeitsbezogenen Daten den gesicherten Hardwarebereich.

Bei der Authentifizierungsvorrichtung kann der kryptographisch gesicherte Hardwarebereich einen weiteren Prozessor zur Ausführung des Computerprogramms aufweisen. Nicht nur die Daten als solche können so in einem sicheren Bereich gespeichert sein. Das neuronale Netz in Form des Computerprogramms kann sich so auf einem Prozessor des kryptographisch gesicherten Hardwarebereichs ausführen lassen.

Die Authentifikationsvorrichtung kann ausgebildet sein, das digitale Vergleichskopfmodell über ein Kommunikationsnetzwerk an einen Server, insbesondere verschlüsselt, auszusenden und, ansprechend auf das Aussenden des digitalen Vergleichskopfmodells, von dem Server den Vergleichsmerkmalssatz über das Kommunikationsnetzwerk, insbesondere kryptographisch verschlüsselt, zu empfangen. Bei dieser Ausführungsform kann der Server das neuronale Netz ausführen. Damit ergibt sich der technische Vorteil, dass die Rechenschritte zum Ausführen des neuronalen Netzes auf einem externen Server ausgeführt werden können, der mehr Rechenleistung zur Verfügung stellen kann als der Prozessor der Authentifizierungsvorrichtung, der beispielsweise ein Smartphone-Prozessor sein kann.

Gemäß einer Ausführungsform der Authentifizierungsvorrichtung kann der Referenzmerkmalssatz eine vorgegebene Anzahl von Datenwerten umfassen, insbesondere eine Anzahl von beispielsweise 128 Datenwerten. Mit einer so geringen Anzahl von Datenwerten kann die Authentifizierung auf effiziente und sparsame Weise ausgeführt werden. Auch mit einer solch geringen Anzahl von Datenwerten ist ein Rückrechnen von den oben genannten 128 Datenwerten auf den Eingang des KI-Modells bzw. des neuronalen Netzes nicht so einfach möglich oder gar unmöglich. Es entsteht zwar eine hoch-spezifische Kennung pro Person, mittels derer sich die Person mit einer sehr hohen Wahrscheinlichkeit identifizieren lässt, jedoch ist diese nicht unmittelbar auf Feature bzw. Merkmale des Kopfes zurückzurechnen, da es sich bei dem KI-Modell im allgemeinen um ein nicht-lineares Modell handelt. Es gibt weniger personenbezogene Daten.

In einem Beispiel kann ein Identifikationsdokument zur Identifikation einer Person vorgesehen sein, wobei das Identifikationsdokument die folgenden Merkmale aufweist: einen Speicherbereich, wobei in dem Speicherbereich ein Referenzmerkmalssatz gespeichert ist, wobei der Referenzmerkmalssatz digitale Referenzmerkmale eines digitalen Referenzkopfmodells, welches ein Referenzkopfbild der Person repräsentiert, aufweist wobei der Referenzmerkmalssatz eine Antwort unter Verwendung eines trainierten neuronalen Netzes umfasst; und einer Kommunikationsschnittstelle, welche ausgebildet ist, die digitalen Referenzmerkmale ansprechend auf den Empfang eines Auslesesignals auszugeben.

Eine solches Identifikationsdokument bietet den Vorteil, dass der Referenzmerkmalssatz mit den digitalen Referenzmerkmalen des digitalen Referenzkopfmodells sich in dem Speicherbereich speichern lässt, und dieser wieder ausgelesen werden kann, um ihn mit dem Vergleichsmerkmalssatz mit den digitalen Vergleichsmerkmalen zu vergleichen. Dies ist möglich, da das mit dem digitalen Referenzkopfmodell trainierte neuronale Netz bzw. der Code dazu öffentlich verfügbar ist, so dass das das KI Modell jedem bekannt ist und von jeder Prüfstelle sich damit der Vergleichsmerkmalssatz mit den digitalen Vergleichsmerkmalen zur Authentifikation der Person bestimmen lässt.

Bei dem Identifikationsdokument kann der Speicherbereich in dieser oder anderen Ausführungen gegen Manipulation eines Speicherinhalts gesichert sein, insbesondere kryptographisch gesichert. Der Speicherbereich kann basierend auf einer Obfuskation des Speicherinhalts verschlüsselt sein. Mittels "Obfuscating" bzw. Verschleierung kann eine weitere Verschleierung erfolgen.

Bei dem Identifikationsdokument kann der Speicherbereich eine Mehrzahl von Datengruppen aufweisen, wobei der Referenzmerkmalssatz zusammen mit einer Versionsnummer des mit dem digitalen Referenzkopfmodell trainierten neuronalen Netzes unter einer vorbestimmten Datengruppe in dem Speicherbereich gespeichert ist. Über die Versionsnummer können sich verschiedene KI-Modelle bzw. mit dem digitalen Referenzkopfmodell trainierte neuronale Netze abrufen lassen. So kann im Laufe der Zeit sich das KI-Modell ändern, zum Beispiel nach zwischenzeitlichen Ausspähangriffen. Über die Versionsnummer kann das aktuell gültige Kl-Modell jederzeit identifiziert und angesprochen werden. Mittels Versionierung ist beispielweise eine Langzeit Update-Fähigeit erreichbar, man kann jederzeit das KI Modell austauschen und eine neue Version ins Netz stellen.

In einem Beispiel kann ein Verfahren zum Herstellen eines Identifikationsdokumentes vorgesehen sein, welches einer Person zugeordnet ist, wobei das Verfahren Folgendes umfassend: Aufnehmen eines Referenzkopfbildes der Person; Erzeugen eines digitalen Referenzkopfmodells anhand des Referenzkopfbildes der Person, wobei das digitale Referenzkopfmodell das Referenzkopfbild der Person repräsentiert; Ausführen eines neuronalen Netzes, um einen Referenzmerkmalssatz zu erhalten, wobei der Referenzmerkmalssatz digitale Referenzmerkmale des digitalen Referenzkopfmodells aufweist, wobei das neuronale Netz durch einen Referenzparametersatz definiert ist.

Ein solches Verfahren bietet den Vorteil, dass das mit dem digitalen Referenzkopfmodell trainierte neuronale Netz bzw. der Code dazu öffentlich verfügbar ist, so dass das das KI Modell jedem bekannt ist und von jeder Prüfstelle eine Authentifikation der Person auf einfache und effiziente Art und Weise vorgenommen werden kann. Der Vergleichsmerkmalssatz mit den digitalen Vergleichsmerkmalen liefert dazu weit weniger Daten als die originalen Bilddaten des Kopfbildes, die beispielsweise als 3D Bilddaten vorliegen.

Das neuronale Netz kann zur Erzeugung des Referenzmerkmalssatzes anhand einer Mehrzahl von digitalen Kopfmodellen trainiert werden, wobei eines der digitalen Kopfmodelle das digitale Referenzkopfmodell ist. Das neuronale Netz kann so aufgrund des zuvor erfolgten Trainings sehr gut zwischen verschiedenen digitalen Kopfmodellen unterscheiden.

Das digitale Referenzkopfmodell kann über ein Kommunikationsnetzwerk an einen entfernten Server ausgesendet, wobei das neuronale Netz auf dem entfernten Server trainiert wird, um den Referenzmerkmalssatz zu erzeugen. Die rechenintensiven Arbeiten wie das Trainieren des neuronalen Netzes können so auf dem entfernten Server erfolgen, der als ein Server mit hoher Rechenleistung bereitgestellt werden kann. Der Referenzmerkmalssatz kann zum Beispiel von dem Server über ein Kommunikationsnetzwerk empfangen werden.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Authentifizierungsvorrichtung zum Authentifizieren einer Person anhand eines Identitätsdokuments;
- Fig. 2: eine schematische Darstellung eines Identifikationsdokuments;
- Fig. 3: eine schematische Darstellung eines Verfahrens zum Herstellen eines Identifikationsdokumentes und
- Fig. 4: eine schematische Darstellung zum Erzeugen von veränderten Referenzantwortdaten aus Referenzantwortdaten die Referenzmerkmale eines digitalen Referenzkopfmodells repräsentieren.

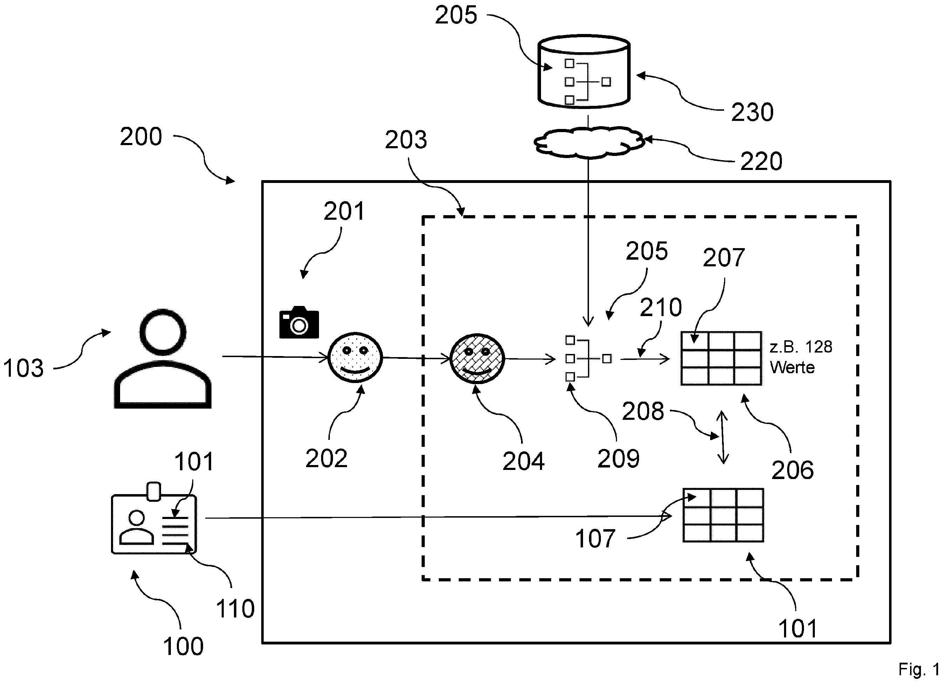

Die Fig. 1 bis 4 zeigen schematische Darstellungen und dienen zur Erläuterung weiterer Ausführungsbeispiele.

Fig. 1 zeigt eine schematische Darstellung einer Authentifizierungsvorrichtung 200 zum Authentifizieren einer Person 103 anhand eines Identitätsdokuments (ID-Dokument) 100.

Die Authentifizierungsvorrichtung 200 dient dem Authentifizieren einer Person 103 anhand des Identifikationsdokumentes 100, welches der Person 103 zugeordnet ist. Das Identifikationsdokument 100 weist einen Speicherbereich 110 auf, in welchem ein Referenzmerkmalssatz 101 gespeichert ist. Der Referenzmerkmalssatz 101 weist digitale Referenzmerkmale 107 eines digitalen Referenzkopfmodells, welches ein Referenzkopfbild der Person 103 repräsentiert, auf.

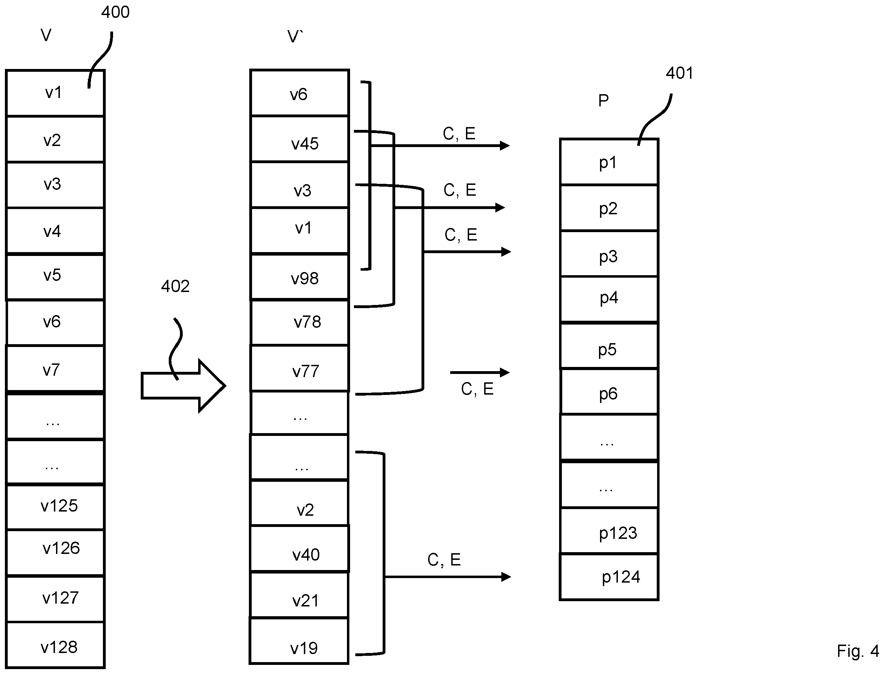

Der Referenzmerkmalssatz 101 umfasst die digitale Referenzmerkmale 107, welche veränderte Referenzantwortdaten umfassen. Die veränderten Referenzantwortdaten sind ausgehend von Referenzantwortdaten (Antwort), unter Verwendung einer auf die Referenzantwortdaten angewendeten Änderungsvorschrift, gebildet (vgl. weitere Erläuterungen unten zu Fig. 4). Die veränderten Referenzantwortdaten sind verschieden von den Referenzantwortdaten. Die Referenzantwortdaten zeigen eine Referenzantwort (insbesondere Antwort 212) eines trainierten neuronalen Netzes 205 an, das durch einen Referenzparametersatz 209 definiert ist. Die Referenzantwortdaten zeigen zum Beispiel eine Gruppe von Referenzmerkmalen des digitalen Referenzkopfmodells an, aus denen, unter Anwendung der Änderungsvorschrift, die veränderten Referenzantwortdaten bestimmt werden, welche die Gruppe von Referenzmerkmalen in veränderter oder verschleiert Form anzeigen.

Die Authentifizierungsvorrichtung 200 umfasst eine Bildaufnahmeeinrichtung 201, welche ausgebildet ist, ein Kopfbild 202 der Person 103 aufzunehmen, beispielsweise ein dreidimensionales Kopfbild 202.

Die Authentifizierungsvorrichtung 200 umfasst einen Prozessor 203, welcher ausgebildet ist, ein digitales Vergleichskopfmodell 204 anhand des aufgenommenen Kopfbildes 202 der Person 103 zu erzeugen.

Der Prozessor 203 ist ferner ausgebildet, anhand des digitalen Vergleichskopfmodells 204 einen Vergleichsmerkmalssatz 206 mit digitalen Vergleichsmerkmalen 207 als eine (Vergleichs-)Antwort 210 des trainierten neuronalen Netzes 205 bzw. unter Verwendung des neuronalen Netzes 205 bereitzustellen. Dabei repräsentieren die digitalen Vergleichsmerkmale 207 das Vergleichskopfmodell 204. Das neuronale Netz 205 ist durch den Referenzparametersatz 209 definiert.

Der Prozessor 203 ist ferner ausgebildet, einen Unterschied 208 zwischen den digitalen Referenzmerkmalen 107 und den digitalen Vergleichsmerkmalen 207 zu bestimmen, um die Person 103 zu authentifizieren.

Das digitale Referenzkopfmodell ist beispielsweise ein dreidimensionales digitales Referenzkopfmodell, und das digitale Vergleichskopfmodell ist beispielsweise ein dreidimensionales digitales Vergleichskopfmodell.

Das mit dem digitalen Referenzkopfmodell trainierte neuronale Netz 205 und / oder das digitale Referenzkopfmodell können auf einem öffentlich zugänglichen Server 230 abgelegt sein und von dem öffentlich zugänglichen Server 230 durch die Authentifizierungsvorrichtung 200 abrufbar sein. Damit kann jede Kontrollstelle das trainierte Modell bzw. das trainierte neuronale Netz 205 herunterladen und zur Verifikation nutzen.

Zum Trainieren des neuronalen Netzes 205 mit dem digitalen Referenzkopfmodell können dem neuronalen Netz 205 eine Vielzahl von digitalen Kopfmodellen unterschiedlicher Personen vorgelegt werden. Der Referenzparametersatz, der das neuronale Netz 205 definiert, kann im Laufe des Trainings so variiert bzw. eingestellt werden, dass das neuronale Netz 205 bei einem Vergleichskopfmodell, das der gleichen Person entspricht wie das digitale Referenzkopfmodell dieselbe oder eine zumindest sehr ähnliche Antwort (Antwortdatensatz) ausgibt. Dann ähnelt der Vergleichsmerkmalssatz 206 mit den digitalen Vergleichsmerkmalen 207 dem Referenzmerkmalssatz 101 mit den digitalen Referenzmerkmalen 107 sehr stark oder ist sogar zu diesem identisch. Das Training des neuronalen Netzes kann im Vorfeld erfolgen. Beim Inbetriebnehmen der Authentifikationsvorrichtung 200 ist das Training dann bereits erfolgt und es steht ein trainiertes neuronales Netz 205 zur Verfügung.

Der Prozessor 203 kann ausgebildet sein, die Person 103 zu authentifizieren, falls der Unterschied 208 einen vorbestimmten Schwellwert unterschreitet, und der Person 103 die Authentifikation zu verweigern, falls der Unterschied 208 den vorbestimmten Schwellwert überschreitet.

Die digitalen Referenzmerkmale 107 können als Referenzmerkmalsvektor vorliegen. Die digitalen Vergleichsmerkmale 207 können als Vergleichsmerkmalsvektor vorliegen. Der Prozessor 203 kann ausgebildet sein, den Unterschied 208 auf der Basis einer Differenz zwischen dem Referenzmerkmalsvektor und dem Vergleichsmerkmalsvektor zu bestimmen. Der Unterschied 208 kann beispielsweise als euklidischer Abstand zwischen den beiden Vektoren bestimmt werden oder auch als Mahalanobis-Abstand.

Der Prozessor 203 kann ausgebildet sein, einen Differenzvektor zwischen dem Referenzmerkmalsvektor und dem Vergleichsmerkmalsvektor zu bestimmen. Zur Bestimmung des Unterschieds 208 kann beispielsweise eine Phase des Differenzvektors und / oder ein Betrag des Differenzvektors bestimmt werden.

Der Prozessor 203 kann ausgebildet sein, ein Computerprogramm auszuführen oder eine Ausführung eines Computerprograms zu initiieren, das das neuronale Netz 205 mit dem Referenzparametersatz 209 implementiert. Der Prozessor 203 kann ausgebildet sein die digitalen Vergleichsmerkmale 207 anhand des digitalen Vergleichskopfmodells 204 unter Verwendung des neuronalen Netzes 205 zu erzeugen.

Die Authentifizierungsvorrichtung 200 kann ausgebildet sein, das Computerprogramm, das das neuronale Netz 205 mit dem Referenzparametersatz 209 implementiert, über ein Kommunikationsnetzwerk 220 zu empfangen oder abzurufen. Das Computerprogramm kann auf einem öffentlich zugänglichen entfernten Server gespeichert sein und für jede Anwendung abrufbar sein, welche die Person authentifizieren möchte.

Das Computerprogramm kann beispielsweise in einem kryptographisch gesicherten Hardwarebereich gespeichert sein. Die Authentifizierungsvorrichtung 200 kann ausgebildet sein, das Computerprogramm in dem kryptographisch gesichertem Hardwarebereich auszuführen. Der kryptographisch gesicherte Hardwarebereich kann beispielsweise einen weiteren Prozessor zur Ausführung des Computerprogramms aufweisen. Damit wird das Computerprogramm in einem Prozessor des gesicherten Hardwarebereichs ausgeführt.

Die Authentifizierungsvorrichtung 200 kann ausgebildet sein, das digitale Vergleichskopfmodell 204 über ein Kommunikationsnetzwerk 220 an einen Server 230 auszusenden, zum Beispiel in verschlüsselter Form. Die Authentifizierungsvorrichtung 200 kann ausgebildet sein, ansprechend auf das Aussenden des digitalen Vergleichskopfmodells 204, von dem Server 230 den Vergleichsmerkmalssatz 206 über das Kommunikationsnetzwerk 220, zum Beispiel in kryptographisch verschlüsselter Form, zu empfangen.

Das digitale Referenzkopfmodell 211 kann beispielsweise auf einer Schätzung einer Gesichtsgeometrie der Person 103 basieren und eine dreidimensionale Oberflächengeometrie der Person 103 basierend auf der geschätzten Gesichtsgeometrie unter Verwendung von maschinellem Lernen abbilden, wie weiter unten genauer beschrieben. Der Referenzmerkmalssatz 101 kann eine vorgegebene Anzahl von Datenwerten umfassen, beispielsweise eine Anzahl von 128 Datenwerten.

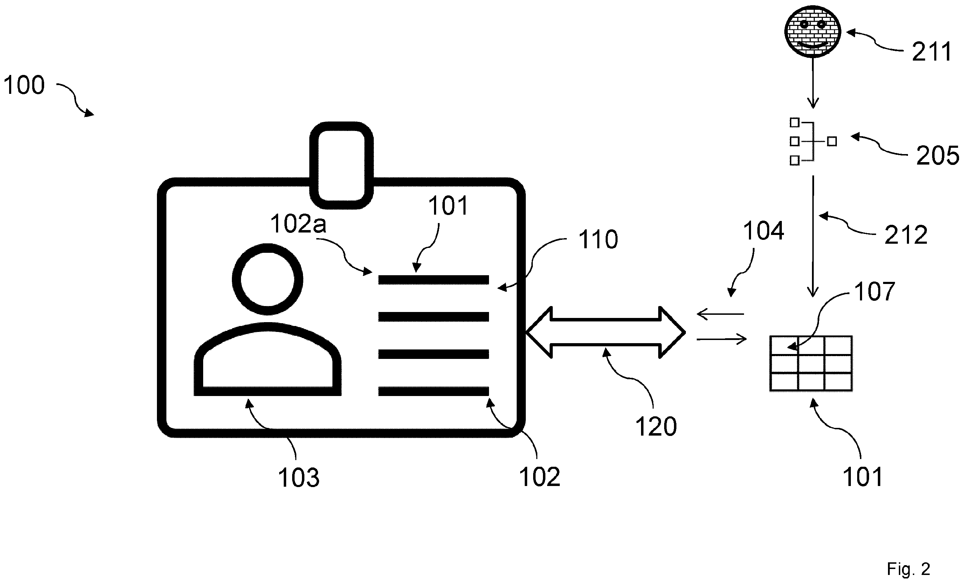

Das neuronales Netz 205 kann ein "Convolutional Neural Network" (CNN) sein. Es wird derart trainiert ("Modell"), dass aus dem digitalen Referenzkopfmodell 211 (siehe hierzu auch Fig. 2), das zum Beispiel in Form von 3D Daten vorliegt, eine Antwort 212 erzeugt wird, zum Beispiel in Form von 128 Datenwerten, die sich für verschiedene Personen in einer maximalen Varianz über alle Versuchspersonen auswirkt. Dies kann zum Beispiel erreicht werden, indem als Feedback für das CNN Training die Differenzen, die durch paarweisen Vergleich zwischen Parametern und den verschiedenen Personen entstehen, addiert werden. Ausgehend von der Antwort 212 bestimmt sich der Referenzmerkmalssatz 201 mit den digitalen Referenzmerkmalen 107 (vgl. weitere Erläuterungen zu Fig. 4 unten).

Das trainierte Modell, hier auch als KI-Modell bezeichnet, kann dann veröffentlicht werden, und seine Versionsnummer in den Reisepass bzw. das ID Dokument abgelegt werden, zum Beispiel in einer öffentlich bekannten Datengruppe (DG NN).

Die live oder aktuell aufgenommenen Daten vom 3D-Sensor bzw. der Bildaufnahmeeinrichtung 201 zum Beispiel des Smartphones, hier in Fig. 1 das Kopfbild 202 der Person 103 bzw. das aus dem Kopfbild 202 erzeugte digitale Vergleichskopfmodell 204, können ebenfalls durch das gleiche KI-Modell bzw. das gleiche trainierte neuronale Netz 205 prozessiert werden, um daraus die Antwort 210 des neuronalen Netzes 205 auf das digitale Vergleichskopfmodell 204 zu bestimmen, die zum Beispiel in Form der 128 oben genannten Datenwerte vorliegen kann. Ausgehend von der Antwort 210 bestimmt sich der Vergleichsmerkmalssatz 206 mit den digitalen Vergleichsmerkmalen 207 (vgl. weitere Erläuterungen zu Fig. 4 unten). Hier kann das öffentliche Modell als Vorschrift zur Prüfung durch die Smartphone App auf dem Prozessor 203 dienen.

Diese Bearbeitung kann in einer Ausführungsform im sicheren Umfeld des Smartphones geschehen wahlweise also in der SECURE ENCLAVE oder einer anderen.

Die SECURE ENCLAVE ist ein dediziertes sicheres Subsystem, das in das SoC (System on Chip) integriert ist. Die SECURE ENCLAVE ist vom Hauptprozessor isoliert, was eine zusätzliche Sicherheitsebene mit sich bringt, und ist darauf ausgelegt, die Sicherheit sensibler Benutzerdaten selbst dann zu gewährleisten, wenn der Kernel des Anwendungsprozessors kompromittiert werden sollte. Sie folgt denselben Designprinzipien wie das SoC insgesamt, d.h., sie verfügt zum Beispiel über ein Boot-ROM, das einen Hardware-Vertrauensanker etabliert, eine AES-Engine für effiziente und sichere kryptografische Operationen und geschützten Speicher. Die SECURE ENCLAVE verfügt aber über einen Mechanismus zum sicheren Speichern von Informationen auf dem angeschlossenen Speicher, der unabhängig von dem vom Anwendungsprozessor und dem Betriebssystem verwendeten Flashspeicher ist.

Der Prozessor der SECURE ENCLAVE stellt die hauptsächliche Rechenleistung für die SECURE ENCLAVE bereit. Um die strikte Isolation zu gewährleisten, wird der Prozessor der SECURE ENCLAVE beispielsweise ausschließlich von der SECURE ENCLAVE genutzt. Dies hilft bei der Abwehr von Seitenkanalattacken, die den Ansatz verfolgen, dass die Schadsoftware denselben Ausführungskern wie die Zielsoftware verwendet, die im Fokus des Angriffs steht.

Der Vergleich mit den Daten des ID Halters, d.h. der in Fig. 1 dargestellten Person 103, findet dann beispielsweise nur aufgrund der oben genannten 128 Werte statt, beispielsweise mittels einer Wahrscheinlichkeitsabschätzung, ob die aufgenommenen Daten dem ID Halter entsprechen, d.h. ob es ein "matching" bzw. eine Übereinstimmung der Daten gibt.

Die Bildaufnahmeeinrichtung 201 kann beispielsweise ein Smartphone sein, welches das Kopfbild 202 der Person 103 als dreidimensionales Kopfbild anhand einer oder mehrerer Kameras des Smartphones aufnehmen kann. Der Prozessor 203 kann dabei ein Prozessor des Smartphones sein, der das digitale Vergleichskopfmodell 204 anhand des durch eine Kamera des Smartphones aufgenommenen Kopfbildes der Person erzeugen kann. Der Prozessor des Smartphones kann zudem die Weiterverarbeitung übernehmen und so die Authentifizierung der Person durchführen.

Der Prozessor 203 kann ein auf dem neuronalen Netz 205 basierendes End-to-End-Modell bestimmen und damit eine ungefähre 3D-Mesh-Darstellung des Gesichts der Person 103 aus einer einzelnen Kameraeingabe für AR-Anwendungen ableiten. Das relativ dichte Netzmodell mit zum Beispiel 468 Scheitelpunkten eignet sich gut für gesichtsbasierte AR-Effekte. Das End-to-End Modell zeigt Super-Echtzeit-Inferenzgeschwindigkeit auf mobilen GPUs (100-1000+ FPS, je nach Gerät und Modellvariante) und eine hohe Vorhersagequalität, die mit der Varianz bei manuellen Annotationen desselben Bildes vergleichbar ist.

Der Prozessor 203 kann ausgebildet sein, das digitale Vergleichskopfmodell 204 gemäß einer Gesichtsgeometrielösung, beispielsweise gemäß Google's "MediaPipe Face Mesh" in Echtzeit zu bestimmen. Eine solche Gesichtsgeometrielösung, die zum Beispiel 468 3D-Gesichtsmarkierungen in Echtzeit schätzen kann, kann auf Mobilgeräten eingesetzt werden. Es verwendet dazu maschinelles Lernen (ML), um die 3D-Oberflächengeometrie abzuleiten, wobei nur eine einzige Kameraeingabe erforderlich ist, ohne dass ein dedizierter Tiefensensor erforderlich ist. Durch den Einsatz leichter Modellarchitekturen zusammen mit GPU-Beschleunigung in der gesamten Pipeline liefert die Lösung Echtzeitleistung, die für Live-Erlebnisse entscheidend ist.

Darüber hinaus kann diese Lösung mit einem Gesichtsgeometrie-Modul gebündelt sein, das die Lücke zwischen der Erkennung von Gesichtsmerkmalen und nützlichen AR-Anwendungen (Augmented Reality) in Echtzeit schließt. Das Gesichtsgeometrie-Modul erstellt einen metrischen 3D-Raum und verwendet die Bildschirmpositionen der Gesichtsmarkierungen, um die Gesichtsgeometrie innerhalb dieses Raums zu schätzen. Die Gesichtsgeometriedaten bestehen aus üblichen 3D-Geometriegrundelementen, einschließlich einer Gesichtshaltungs-Transformationsmatrix und einem dreieckigen Gesichtsnetz. Über eine einfache statistische Analysemethode kann eine robuste, leistungsfähige und tragbare Logik gesteuert werden. Die Analyse kann auf dem Prozessor 203 ausgeführt werden und hat zusätzlich zur ML-Modellinferenz einen minimalen Geschwindigkeits-/Speicherbedarf.

Das Gesichtsgeometrie-Modul, das auf dem Prozessor 203 zum Beispiel eines Smartphones laufen kann, umfasst eine Machine Learning (ML)-Pipeline, die beispielsweise aus zwei tiefen neuronalen Echtzeit-Netzwerkmodellen bestehen kann, die zusammenarbeiten: Ein Detektor, der auf dem gesamten Bild arbeitet und Gesichtspositionen berechnet, und ein 3D-Gesichtsmarkenmodell, das auf diesen Positionen arbeitet und die ungefähre Oberflächengeometrie durch Regression vorhersagt. Das genaue Zuschneiden des Gesichts reduziert den Bedarf an üblichen Datenerweiterungen wie affinen Transformationen, die aus Drehungen, Verschiebungen und Skalierungsänderungen bestehen, drastisch. Stattdessen ermöglicht es dem Netzwerk, den größten Teil seiner Kapazität der Genauigkeit der Koordinatenvorhersage zu widmen. Darüber hinaus können die Ausschnitte in der ML-Pipeline auch auf der Grundlage der im vorherigen Frame identifizierten Gesichtsmarkierungen generiert werden, und nur wenn das Markierungsmodell die Gesichtspräsenz nicht mehr identifizieren konnte, wird der Gesichtsdetektor aufgerufen, um das Gesicht neu zu lokalisieren.

Die ML-Pipeline kann als ein MediaPipe-Graph implementiert werden, der einen Teilgraphen für Gesichtsmarkierungen aus dem Modul für Gesichtsmarkierungen verwendet und mit einem dedizierten Teilgraphen des Gesichtsrenderers rendert. Ein Face Landmark Subgraph kann dabei intern einen Gesichtserkennungs-Subgrafen aus dem Gesichtserkennungsmodul verwenden.

Das neuronale Netz 205 kann ein Convolutional Neural Network sein. Die Struktur eines solchen Convolutional Neural Networks besteht aus einem oder mehreren Convolutional Layer, gefolgt von einem Pooling Layer. Diese Einheit kann sich prinzipiell beliebig oft wiederholen (Deep Convolutional Neural Network). Charakteristische Merkmale eines solchen Convolutional Neural Network sind: 2D- oder 3D-Anordnung der Neuronen; geteilte Gewichte; und lokale Konnektivität.

In der Regel liegt die Eingabe als zwei- oder dreidimensionale Matrix (z. B. die Pixel eines Graustufen- oder Farbbildes) vor. In Fig. 1 handelt es sich dabei um das Kopfbild 202 der Person 103, das von der Bildaufnahmeeinrichtung 201 aufgenommen wurde. Dementsprechend sind die Neuronen im Convolutional Layer angeordnet. Die Aktivität jedes Neurons wird über eine diskrete Faltung berechnet. Dabei wird schrittweise eine vergleichsweise kleine Faltungsmatrix (Filterkernel) über die Eingabe, d.h., das Kopfbild 202 der Person 103, bewegt. Die Eingabe eines Neurons im Convolutional Layer berechnet sich als inneres Produkt des Filterkernels mit dem aktuell unterliegenden Bildausschnitt. Dementsprechend reagieren benachbarte Neuronen im Convolutional Layer auf sich überlappende Bereiche (ähnliche Frequenzen in Audiosignalen oder lokale Umgebungen in Bildern).

Ein Neuron in dieser Schicht oder Ebene (Layer) reagiert beispielsweise nur auf Reize in einer lokalen Umgebung der vorherigen Schicht (Layer). Dies folgt dem biologischen Vorbild des rezeptiven Feldes. Zudem können die Gewichte für alle Neuronen eines Convolutional Layers identisch sein (geteilte Gewichte bzw. "*shared weights*")*.* Dies führt dazu, dass beispielsweise jedes Neuron im ersten Convolutional Layer codiert, zu welcher Intensität eine Kante in einem bestimmten lokalen Bereich der Eingabe vorliegt. Aus den geteilten Gewichten folgt unmittelbar, dass Translationsinvarianz eine inhärente Eigenschaft des CNNs ist. Diese geteilten Gewichte sind beispielsweise ein Teil des Referenzparametersatzes 209, der die Eigenschaften des zu verwendenden neuronalen Netzes 205 festlegt.

Der mittels diskreter Faltung ermittelte Input eines jeden Neurons wird nun von einer Aktivierungsfunktion, bei CNNs üblicherweise Rectified Linear Unit (ReLU) in den Output verwandelt, der die relative Feuerfrequenz eines echten Neurons modellieren soll. Da Backpropagation die Berechnung der Gradienten verlangt, wird in der Praxis eine differenzierbare Approximation von ReLU benutzt. Analog zum visuellen Cortex steigt in tiefer gelegenen Convolutional Layers sowohl die Größe der rezeptiven Felder als auch die Komplexität der erkannten Features (beispielsweise Teile eines Gesichts).

Im folgenden Schritt, dem Pooling, werden überflüssige Informationen verworfen. Zur Objekterkennung in Bildern etwa ist die *exakte* Position einer Kante im Bild von vernachlässigbarem Interesse - die ungefähre Lokalisierung eines Features ist hinreichend. Es gibt verschiedene Arten des Poolings. Bei dem Max-Pooling wird aus jedem Quadrat aus Neuronen des Convolutional Layers nur die Aktivität des aktivsten (daher "Max") Neurons für die weiteren Berechnungsschritte beibehalten; die Aktivität der übrigen Neuronen wird verworfen. Trotz der Datenreduktion (zum Beispiel Beispiel 75 %) verringert sich in der Regel die Performance des Netzwerks nicht durch das Pooling. Im Gegenteil, es bietet die folgenden signifikanten Vorteile: Verringerter Platzbedarf und erhöhte Berechnungsgeschwindigkeit; daraus resultierende Möglichkeit zur Erzeugung tieferer Netzwerke, die komplexere Aufgaben lösen können; automatisches Wachstum der Größe der rezeptiven Felder in tieferen Convolutional Layers ohne dass dafür explizit die Größe der Faltungsmatrizen erhöht werden müsste; und Präventionsmaßnahme gegen Overfitting.

Mit dem Referenzparametersatz 209 wird die Charakteristik des neuronalen Netzes 205 festgelegt, also beispielsweise die Gewichte, die Anzahl Layers (Schichten oder Ebenen), die Art der Aktivierungsfunktion, die Rectified Linear Unit und deren Approximationsfunktion, die Art des Poolings. Mit diesem Referenzparametersatz 209 arbeitet das neuronale Netz 205 in der Weise, dass bei mehreren Kopfbildern der gleichen Person sich das gleiche oder ein sehr ähnliches Vergleichskopfmodell 204 ergibt.

Die Authentifizierungsvorrichtung 200 kann über eine Kommunikationsschnittstelle verfügen, um den Referenzmerkmalssatz 101 aus dem Identifikationsdokument 100 auszulesen. Die Kommunikationsschnittstelle ist beispielsweise eine WLAN-Kommunikationsschnittstelle oder eine Ethernet-Kommunikationsschnittstelle oder eine Internet-Kommunikationsschnittstelle oder eine Bluetooth-Kommunikationsschnittstelle oder eine MFC-Kommunikationsschnittstelle. An die Kommunikationsschnittstelle der Authentifizierungsvorrichtung 200 kann beispielsweise eine Kommunikationsschnittstelle 120 des Identifikationsdokumentes 100 angekoppelt werden (siehe Fig. 2), welches den Referenzmerkmalssatz 101 aus dem Identifikationsdokument 100 ausliest.

Im Folgenden wird eine alternative Ausführungsform der Bildaufnahmeeinrichtung 201 und der Erzeugung des Kopfbildes 202 der Person und zur Bestimmung des digitalen Vergleichskopfmodells 204 beschrieben.

Die Bildaufnahmeeinrichtung 201 kann eine Anordnung von einen oder mehreren Kameras umfassen, um ein oder mehrere Kopfbilder der Person aufzunehmen, die Bildaufnahmeeinrichtung 201 kann beispielsweise ein Gehäuse umfassen, in welchem die Bildaufnahmeeinrichtung 201 angeordnet ist.

Die Bildaufnahmeeinrichtung 201 des Smartphones oder der Kameraanordnung kann beispielsweise eine erste Bildkamera sowie eine zweite Bildkamera umfassen. Die Bildkameras sind bevorzugt digitale Bildkameras, deren aufgenommene Bilder in der Gestalt von digitalen Bilddaten vorliegen. Die erste Bildkamera, insbesondere ein Objektiv der ersten Bildkamera, hat beispielsweise eine erste optische Brennweite, welche beispielsweise eine Weitwinkelbrennweite sein kann. Die erste Brennweite kann beispielsweise 35 mm betragen.

Die zweite Bildkamera, insbesondere ein Objektiv der zweiten Bildkamera, hat beispielsweise eine zweite optische Brennweite, bei welcher es sich nicht um eine Weitwinkelbrennweite handelt. Die zweite Brennweite kann beispielsweise eine Tele-Brennweite sein und 105 oder 110 mm betragen.

Der Prozessor 203 kann beispielsweise anhand des von der ersten Kamera aufgenommenen Kopfbildes und anhand des von der zweiten Kamera aufgenommenen Kopfbildes der Person ein dreidimensionales Kopfbild der Person erzeugen und daraus ein digitales Vergleichskopfmodell 204 der Person 103 bestimmen. Beide Kopfbilder zeigen unterschiedliche Perspektiven der Person, so dass aus diesen unterschiedlichen Perspektiven das dreidimensionale Kopfbild 202 und daraus das digitale Vergleichskopfmodell 204 der Person 103 bestimmt werden kann.

Beispielsweise kann die erste Bildkamera in einer geringeren Entfernung zu der Person 103 angeordnet sein als die zweite Bildkamera. Darüber hinaus kann die erste Bildkamera mit einer geringeren optischen Brennweite verbunden sein als die zweite Bildkamera. Aus diesem Grund ist in den beiden Kopfbildern ein Bildunterschied erkennbar, der bei einer Übereinanderlegung der beiden Kopfbilder eine Tiefeninformation liefert, welche zur Modellierung des dreidimensionalen Kopfbildes 202 herangezogen werden kann. So ist beispielsweise ein Nasenbereich der Person 103, der näher an der Apertur angeordnet ist als beispielsweise ein Stirnbereich, in dem ersten Kopfbild größer dargestellt als in dem zweiten Kopfbild. Aus der Vergrößerung kann auf einen Höhenunterschied zu beispielsweise einem Stirnbereich geschlossen werden. Dadurch kann der abbildungsfehlerbedingte Unterschied zwischen den beiden Kopfbildern erfasst werden und in eine Tiefeninformation überführt werden, um das dreidimensionale Kopfbild 202 und daraus das digitale Vergleichskopfmodell 204 der Person 103 zu bestimmen.

Die erste Bildkamera kann beispielsweise in einer ersten optischen Entfernung zu der Person 103 angeordnet sein, während die zweite Bildkamera in einer zweiten optischen Entfernung zu der Person 103 angeordnet sein kann. Die erste optische Entfernung ist bevorzugt geringer als die zweite optische Entfernung.

Die erste optische Entfernung, d.h. die Entfernung der ersten Bildkamera zu der Person, 103 kann beispielsweise 30, 40 oder 50 cm betragen oder in etwa einer Armlänge entsprechen. Dies entspricht einer Aufnahmesituation bei Selbst-Aufnahmen (so genannte Selfie-Aufnahmen) unter Verwendung eines Smartphones oder einer Notebook-Kamera. Die zweite optische Entfernung, d.h. die Entfernung der zweiten Bildkamera zu der Person, kann bevorzugt größer sein als die erste optische Entfernung.

Die Authentifizierungsvorrichtung 200 kann durch ein mobiles Kommunikationsgerät, insbesondere ein Smartphone, realisiert werden. Die Bildaufnahmeeinrichtung 201 kann in diesem Fall eine Bildkamera des Kommunikationsgerätes umfassen, beispielsweise eine Weitwinkel-Bildkamera mit einer Weitwinkel-Brennweite oder eine Bildkamera mit variabler Brennweite, welche die vorstehend beschriebenen Kopfbilder der Person aufnehmen kann.

In einer Ausführungsform kann das Kopfbild der Person 103 als dreidimensionales Kopfbild basierend auf zwei aufeinanderfolgenden Aufnahmen oder einer Serie von Aufnahmen der Bildkamera der Authentifizierungsvorrichtung 200, beispielsweise einer Smartphone-Kamera aufgenommen werden. Die beiden oder mehreren Kopfbilder unterscheiden sich durch die aufeinanderfolgenden Aufnahmen ausreichend voneinander, um aus dem Bildunterschied eine Tiefeninformation für das dreidimensionale Kopfbild abzuleiten.

Gemäß einer Ausführungsform ist die Bildaufnahmeeinrichtung 201 ausgebildet, das Bild der Person 103 aus einer ersten Entfernung zwischen der Bildkameraanordnung 201 und der Person aufzunehmen, wobei die Bildaufnahmeeinrichtung 201 ferner ausgebildet ist, ein weiteres Bild der Person 103 aus einer zweiten Entfernung zwischen der Bildaufnahmeeinrichtung 201 und der Person 103 mit einer weiteren bestimmten Brennweite aufzunehmen, wobei die bestimmte Brennweite und die weitere bestimmte Brennweite unterschiedlich sind, wobei das Bild der Person 103 und das weitere Bild der Person 103 sich um einen optischen Abbildungsfehler, insbesondere um eine optische Verzeichnung, unterscheiden, und wobei ein Prozessor ausgebildet ist, eine Tiefeninformation aus dem optischen Abbildungsfehler abzuleiten, wie es vorstehend beschrieben ist.

Fig. 2 zeigt eine schematische Darstellung des Identifikationsdokuments 100.

Das Identifikationsdokument 100 dient zur Identifikation einer Person 103. Das Identifikationsdokument 100 umfasst einen Speicherbereich 110, in dem ein Referenzmerkmalssatz 101 gespeichert ist. Der Referenzmerkmalssatz 101 umfasst digitale Referenzmerkmale 107 eines digitalen Referenzkopfmodells 211, welches ein Referenzkopfbild der Person 103 repräsentiert. Der Referenzmerkmalssatz 101 umfasst eine geänderte Antwort (geänderter Antwortdatensatz), welcher mittels Verschleierung oder Obfuskation der Daten ausgehend von der Antwort 212 bestimmt wird, die ihrerseits unter Verwendung des trainierten neuronalen Netzes 205 erzeugt wurde. Das Bestimmen des geänderten Antwortdatensatzes ist insbesondere unter Bezugnahme auf Fig. 4 näher erläutert.

Das Identifikationsdokument 100 umfasst eine Kommunikationsschnittstelle 120, welche ausgebildet ist, die digitalen Referenzmerkmale 107 ansprechend auf den Empfang eines Auslesesignals 104 auszugeben.

Der Speicherbereich 110 kann gegen Manipulation eines Speicherinhalts gesichert sein, zum Beispiel kryptographisch gesichert sein. Zum Beispiel kann der Speicherbereich 110 basierend auf einer Obfuskation des Speicherinhalts verschlüsselt sein.

Über eine Obfuskation, die vom Bestimmen der geänderten Antwortdaten zu unterscheiden ist und hierzu ggf. ergänzend vorgesehen sein kann, kann der Programmcode bzw. der Speicherinhalt absichtlich verändert werden, so dass der Quelltext für Menschen schwer verständlich oder schwer rückgewinnbar wird. Damit kann der Aufwand für Reverse Engineering zusätzlich erhöht werden, um Veränderung, unerwünschtes Kopieren von Programmteilen zu erschweren oder um die Funktionalität zu verschleiern.

Eine solche Obfuskation betreffend den Speicherbereich 110 verändert den Speicherinhalt des Speicherbereichs 110 ohne Änderung seiner Funktion. Zum Beispiel werden Variablen- und Funktionsnamen umbenannt oder es wird der Maschinen- oder Bytecode so verwürfelt, dass die Befehlsabschnitte, die einem Hochsprachenbefehl entsprechen, sich mit denen des vorherigen/nachfolgenden Hochsprachenbefehls mischen. Ferner können auch zusätzliche nicht notwendige Befehle oder Daten eingefügt werden. Das kann ein maschinelles Dekompilieren in die ursprüngliche Hochsprache deutlich erschweren oder sogar unmöglich machen.

Zum Beispiel kann der Speicherbereich 110 eine Mehrzahl von Datengruppen 102 umfassen. Dabei kann der Referenzmerkmalssatz 101 zusammen mit einer Versionsnummer des trainierten neuronalen Netzes 205 unter einer vorbestimmten Datengruppe 102a in dem Speicherbereich 110 gespeichert sein.

Das neuronale Netz 205 kann ein "Convolutional Neural Network" (CNN) sein. Es wird derart trainiert ("Modell"), dass aus dem digitalen Referenzkopfmodell 211, das zum Beispiel in Form von 3D Daten vorliegt, die Antwort 210 erzeugt wird, zum Beispiel in Form von 128 Datenwerten, die sich für verschiedene Personen in einer maximalen Varianz über alle Versuchspersonen auswirkt. Dies kann zum Beispiel erreicht werden, indem als Feedback für das CNN Training die Differenzen, die durch paarweisen Vergleich zwischen Parametern und den verschiedenen Personen entstehen, addiert werden. Die Antwort 210 bildet den Ausgangspunkt für die geänderte Antwort 212 für den Referenzmerkmalssatz 101 mit den digitalen Referenzmerkmalen 107.

Der Referenzmerkmalssatz 101 umfasst die digitale Referenzmerkmale 107, welche die veränderte Referenzantwortdaten umfassen. Die veränderten Referenzantwortdaten sind ausgehend von Referenzantwortdaten 212, unter Verwendung einer auf die Referenzantwortdaten angewendeten Änderungsvorschrift, gebildet (vgl. weitere Erläuterungen unten zu Fig. 4). Die veränderten Referenzantwortdaten sind verschieden von den Referenzantwortdaten 212. Die Referenzantwortdaten zeigen die Referenzantwort 212 des trainierten neuronalen Netzes 205 an, das durch einen Referenzparametersatz 209 definiert ist. Die Referenzantwortdaten zeigen zum Beispiel eine Gruppe von Referenzmerkmalen des digitalen Referenzkopfmodells 211 an, aus denen, unter Anwendung der Änderungsvorschrift, die veränderten Referenzantwortdaten bestimmt werden, welche die Gruppe von Referenzmerkmalen in veränderter oder verschleiert Form anzeigen.

Die Antwort 212 des neuronalen Netzes 205 kann auf die Eingabe des digitalen Referenzkopfmodells 211 die Ausgabe des Referenzmerkmalssatzes 101 mit den digitalen Referenzmerkmalen 107 sein, zum Beispiel in Form der oben beschriebenen 128 Datenwerte bzw. Bytes.

Das trainierte Modell kann dann veröffentlicht werden, und seine Versionsnummer in das Identifikationsdokument 100 abgelegt werden, zum Beispiel in einer öffentlich bekannten Datengruppe 102a aus einer Mehrzahl von Datengruppen 102. Zum Beispiel kann eine erste Datengruppe den Namen der Person 103 umfassen, eine zweite Datengruppe Adressinformationen der Person 103, eine dritte Datengruppe einen Fingerabdruck der Person 103 in elektronischer Form und eine vierte Datengruppe 102a das trainierte Modell des neuronalen Netzes 205, zum Beispiel in Form des Referenzparametersatzes 209 des neuronalen Netzes 205, und dessen Versionsnummer.

Die live aufgenommenen Daten von der Bildaufnahmeeinrichtung 201 zum Beispiel des Smartphones, d.h. das Kopfbild 202 der Person 103 bzw. das aus dem Kopfbild 202 erzeugte digitale Vergleichskopfmodell 204, können ebenfalls durch das gleiche KI-Modell bzw. das gleiche trainierte neuronale Netz 205 prozessiert werden, um daraus die (Vergleichs-)Antwort 210 des neuronalen Netzes 205 auf das digitale Vergleichskopfmodell 204 zu bestimmen, wie oben zu Fig. 1 beschrieben. Diese Antwort kann zum Beispiel in Form der 128 oben genannten Datenwerte vorliegen. Ausgehend von der Antwort 210 bestimmt sich der Vergleichsmerkmalssatz 206 mit den digitalen Vergleichsmerkmalen 207, der dann gegen den Referenzmerkmalssatz 101 mit den digitalen Referenzmerkmalen 107 geprüft wird. Das öffentliche Modell kann hier als Vorschrift zur Prüfung durch die Smartphone App auf dem Prozessor 203 dienen.

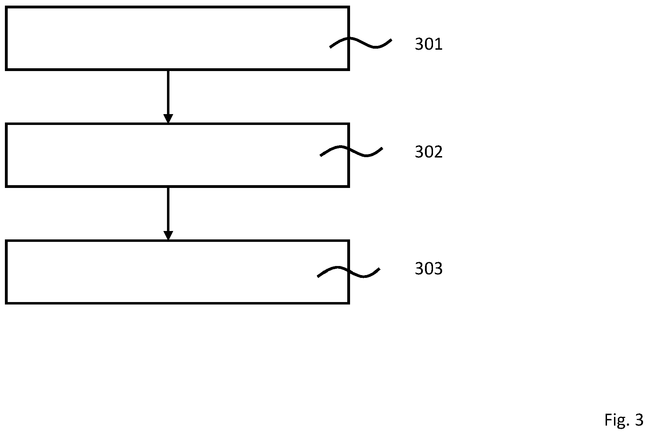

Fig. 3 zeigt eine schematische Darstellung eines Verfahrens zum Herstellen des Identifikationsdokumentes 100. Das Verfahren 300 umfasst in einem Beispiel die folgenden Schritte: Aufnehmen 301 eines Referenzkopfbildes der Person 103, wie zum Beispiel oben zu Fig. 1 beschrieben; Erzeugen 302 eines digitalen Referenzkopfmodells 211 anhand des Referenzkopfbildes der Person 103, wobei das digitale Referenzkopfmodell 211 das Referenzkopfbild der Person repräsentiert, wie zum Beispiel oben zu Fig. 1 beschrieben; und Ausführen 303 eines neuronalen Netzes 205, um einen Referenzmerkmalssatz 101 zu erhalten, wobei der Referenzmerkmalssatz 101 digitale Referenzmerkmale 107 des digitalen Referenzkopfmodells 211 aufweist und das neuronale Netz 205 durch einen Referenzparametersatz 209 definiert ist.

Das neuronale Netz 205 kann zur Erzeugung der Referenzantwortdaten 212 für die Bildung des Referenzmerkmalssatzes 101 anhand einer Mehrzahl von digitalen Kopfmodellen trainiert werden, wobei eines der digitalen Kopfmodelle das digitale Referenzkopfmodell 211 ist. Das digitale Referenzkopfmodell 211 kann zum Beispiel über ein Kommunikationsnetzwerk 220 an einen entfernten Server 230 ausgesendet werden, wobei das neuronale Netz 205 auf dem entfernten Server 230 trainiert werden kann, um die Referenzantwort für die anschließende Bestimmung des Referenzmerkmalssatzes 101 zu erzeugen. Der schließlich bestimmte Referenzmerkmalssatz 101 kann von dem Server 230 über ein Kommunikationsnetzwerk 220 empfangen werden.

Der Referenzmerkmalssatz 101 umfasst die digitale Referenzmerkmale 107, welche veränderte Referenzantwortdaten umfassen. Die veränderten Referenzantwortdaten sind ausgehend von Referenzantwortdaten, unter Verwendung der auf die Referenzantwortdaten angewendeten Änderungsvorschrift, gebildet (vgl. weitere Erläuterungen unten zu Fig. 4). Die veränderten Referenzantwortdaten sind verschieden von den Referenzantwortdaten. Die Referenzantwortdaten zeigen die Referenzantwort des trainierten neuronalen Netzes 205 an, das durch einen Referenzparametersatz 209 definiert ist. Die Referenzantwortdaten zeigen zum Beispiel eine Gruppe von Referenzmerkmalen des digitalen Referenzkopfmodells an, aus denen, zum Bestimmen der veränderten Referenzantwortdaten, unter Anwendung der Änderungsvorschrift, eine geänderte Gruppe oder ein geänderter Satz von Referenzmerkmalen erzeugt wird, welchen dann die veränderten Referenzantwortdaten anzeigen oder repräsentieren.

Fig. 4 zeigt eine schematische Darstellung zum Erzeugen von veränderten Referenzantwortdaten 401 aus Referenzantwortdaten 400 (vergleichbar Antwort 212) die Referenzmerkmale des digitalen Referenzkopfmodells 211 repräsentieren.

Die Referenzantwortdaten 400 repräsentieren in dem gezeigten Beispiel eine Gruppe von Referenzmerkmalen v1, ..., v128. In anderen Ausführungsbeispielen kann eine andere Anzahl von Referenzmerkmalen vorgesehen sein. Zum Erhöhen der Sicherheit in Verbindung mit der Personenidentifizierung ist vorgesehen, aus den Referenzantwortdaten 400 die geänderten oder veränderten Referenzantwortdaten 401 zu bestimmen. Hierzu ist eine Änderungsvorschrift vorgesehen, deren Anwendung auf die Referenzantwortdaten 400 bzw. die hierdurch angezeigten Referenzmerkmale v1, ..., v128 zu veränderten Referenzantwortdaten 401 führt, die bei dem gezeigten Beispiel veränderte Merkmale p1, ..., p124 anzeigen. Die Referenzmerkmale v1, ..., v128 sowie die geänderten Merkmale p1, ..., p124 können jeweils mit einem Merkmalsvektor (V, P) bereitgestellt sein. Die geänderten Merkmale p1, ..., p124 enthalten die Information über die Referenzmerkmale v1, ..., v128 in geänderter oder verschleierter Form.

Bei der in dem Ausführungsbeispiel angewendeten Änderungsvorschrift findet zunächst eine Umsortierung 402 der Referenzmerkmale v1, ..., v128 statt, wie dies Fig. 4 zeigt. Es werden umsortierte Merkmale V' gebildet. Für die Umsortierung kann beispielsweise vorgesehen sein, die Referenzmerkmale v1, ..., v128 ihrer Größe oder ihrem Betragswert entsprechend aufsteigend oder absteigend zu sortieren. Auf diese Weise findet eine personalisierte Umsortierung statt, da Größe / Betrag der Referenzmerkmale v1, ..., v128 von der individuellen Antwort des neuronalen Netzes 205 für die Person 103 abhängt.

Bei dem Beispiel nach Fig. 4 ist dann weiterhin vorgesehen, die um sortierten Referenzmerkmale im Merkmalsvektor V' jeweils mit einem Koeffizienten c1, ..., c128 eines Koeffizientenvektors C zu multiplizieren sowie mit einem Exponenten e1, ..., e128 eines Exponentenvektors E zu potenzieren. Hierdurch werden schließlich die veränderten Referenzantwortdaten 401 erzeugt, welche die ursprüngliche Antwort des neuronalen Netzes 205 in veränderter oder verschleierter Form enthalten. Die veränderten Referenzantwortdaten 401 sind Teil der digitalen Referenzmerkmale 107, die dem Identifikationsdokument 100 zugeordnet gespeichert werden, beispielsweise im Speicherbereich 110. Auf diese Weise erfolgt eine, der Änderungsvorschrift entsprechende, Verschleierung oder Obfuskation der ursprünglichen Referenzmerkmale v1, ..., v128.

Will sich die Person 103 dann mittels des Identifikationsdokuments 100 identifizieren, so bestimmt die Authentifizierungsvorrichtung 200 die digitalen Vergleichsmerkmale 207 in gleicher Weise, wie dies in Verbindung mit Fig. 4 beschrieben wurde. Ausgehend von der Vergleichsantwort (vergleichbar Antwort 210) des neuronalen Netzes 205 (Vergleichsantwortdaten) werden, gemäß der Änderungsvorschrift, veränderte Vergleichsantwortdaten mittels der Authentifizierungsvorrichtung 200 erzeugt. Die veränderten Vergleichsantwortdaten sind Bestandteil der digitalen Vergleichsmerkmale 207 des Vergleichsmerkmalssatzes 206. Hierzu sind der Authentifizierungsvorrichtung 200 das oder die Sortierkriterien zum Umsortieren 401 sowie die Koeffizienten c1, ..., c128 und die Exponenten e1, ..., e128 als Teil der Änderungsvorschrift bekannt, bei der es sich in diesem Fall um eine mehrstufige Rechenvorschrift handelt.

Informationen betreffend die Änderungsvorschrift, zum Beispiel die eine oder die mehreren Sortiervorschriften, können zum Teil für die Authentifizierungsvorrichtung 200 abrufbar im elektronischen Speicher 110 des Identifikationsdokuments 100 gespeichert sein. So kann die Authentifizierungsvorrichtung 200 diese für den Authentifizierungsprozess auslesen. Ein weiterer Teil der Informationen betreffend die Änderungsvorschrift, im erläuterten Beispiel die Koeffizienten und die Exponenten, können der Authentifizierungsvorrichtung 200 getrennt vom Identifikationsdokuments 100 bereitgestellt werden, zum Beispiel mittels Veröffentlichung wie dies für das neuronale Netz 205 erläutert wurde.

Zum Authentifizieren der Person 103 wird dann ein Unterschied zwischen den digitalen Referenzmerkmalen 107 und den digitalen Vergleichsmerkmalen 207 unter Berücksichtigung der veränderten Referenzantwortdaten und der veränderten Vergleichsantwortdaten bestimmt.

Ferner kann ein Computerprogramm zum Ausführen des Verfahrens genutzt werden. Das Computerprogramm kann auf einer Datenverarbeitungsvorrichtung ausgeführt werden.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 100: Identifikationsdokument
- 101: Referenzmerkmalssatz
- 102: Mehrzahl von Datengruppen
- 102a: vorbestimmte Datengruppe
- 103: Person
- 104: Auslesesignal
- 107: digitale Referenzmerkmale
- 110: Speicherbereich
- 120: Kommunikationsschnittstelle
- 200: Authentifizierungsvorrichtung
- 201: Bildaufnahmeeinrichtung bzw. Kamera
- 202: Kopfbild der Person
- 203: Prozessor
- 204: digitales Vergleichskopfmodell
- 205: neuronales Netz
- 206: Vergleichsmerkmalssatz
- 207: digitale Vergleichsmerkmale
- 208: Unterschied zwischen digitalen Referenzmerkmalen und digitalen Vergleichsmerkmalen
- 209: Referenzparametersatz
- 210: Antwort des neuronalen Netzes
- 211: digitales Referenzkopfmodell
- 212: Antwort des neuronalen Netzes
- 220: Kommunikationsnetzwerk
- 230: Server
- 300: Verfahren zum Herstellen eines Identifikationsdokuments
- 301: Aufnehmen Referenzkopfbild
- 302: Erzeugen digitales Referenzkopfmodell
- 303: Ausführen eines neuronalen Netzes
- 400: Referenzantwortdaten
- 401: veränderte Referenzantwortdaten (gemäß Änderungsvorschrift)
- 402: Umsortierung von Referenzmerkmalen

## Patentansprüche

1. Authentifizierungsvorrichtung (200) zum Authentifizieren einer Person (103) anhand eines der Person (103) zugeordneten Identifikationsdokumentes (100), wobei
- in einem dem Identifikationsdokument zugeordneten (100) elektronischen Speicher (110) ein Referenzmerkmalssatz (101) gespeichert ist; und
- der Referenzmerkmalssatz (101)
- digitale Referenzmerkmale (107) eines digitalen Referenzkopfmodells aufweist, welches ein Referenzkopfbild der Person (103) repräsentiert, und
- die digitalen Referenzmerkmale (107) veränderte Referenzantwortdaten (401) umfassen, die ausgehend von Referenzantwortdaten (400), einer Änderungsvorschrift entsprechend, gebildet und von den Referenzantwortdaten (400) verschieden sind, wobei die Referenzantwortdaten eine Referenzantwort (212) eines trainierten neuronalen Netzes (205) anzeigen, das durch einen Referenzparametersatz (209) definiert ist;
die Authentifizierungsvorrichtung (200) aufweisend:
- eine Bildaufnahmeeinrichtung (201), welche eingerichtet ist, ein Kopfbild (202) der Person (103) aufzunehmen; und
- einen Prozessor (203), welcher eingerichtet ist,
- ein digitales Vergleichskopfmodell (204) zu bestimmen, welches das aufgenommene Kopfbild (202) der Person (103) repräsentiert;
- anhand des digitalen Vergleichskopfmodells (204) einen Vergleichsmerkmalssatz (206) zu bestimmen, welcher digitale Vergleichsmerkmale (207) des Vergleichskopfmodells (204) umfasst;
- die digitalen Vergleichsmerkmale (207) veränderte Vergleichsantwortdaten aufweisend zu bestimmen, welche ausgehend von Vergleichsantwortdaten, der Änderungsvorschrift entsprechend, gebildet und von den Vergleichsantwortdaten verschieden sind, wobei die Vergleichsantwortdaten eine Vergleichsantwort (210) des trainierten neuronalen Netzes (205) anzeigen; und
- einen Unterschied (208) zwischen den digitalen Referenzmerkmalen (107) und den digitalen Vergleichsmerkmalen (207) unter Berücksichtigung der veränderten Referenzantwortdaten und der veränderten Vergleichsantwortdaten zu bestimmen, um die Person (103) zu authentifizieren.

2. Authentifizierungsvorrichtung (200) nach Anspruch 1, **dadurch gekennzeichnet, dass**
- Änderungsdaten (C, E) bereitgestellt sind, welche die Änderungsvorschrift anzeigen; und
- der Prozessor (203) eingerichtet ist, die Änderungsdaten zu empfangen und die veränderten Vergleichsantwortdaten, ausgehend von Vergleichsantwortdaten, den Änderungsdaten entsprechend zu bestimmen.

3. Authentifizierungsvorrichtung (200) nach Anspruch 2, **dadurch gekennzeichnet, dass**
- wenigstens eine erste Teilmenge der Änderungsdaten im elektronischen Speicher (110) gespeichert ist; und
- der Prozessor (203) eingerichtet ist, die wenigstens eine erste Teilmenge nach dem Abrufen aus dem elektronischen Speicher (110) zu empfangen und die veränderten Vergleichsantwortdaten, ausgehend von Vergleichsantwortdaten, den Änderungsdaten entsprechend zu bestimmen.

4. Authentifizierungsvorrichtung (200) nach Anspruch 3, **dadurch gekennzeichnet, dass** der Prozessor (203) eingerichtet ist, die wenigstens eine erste Teilmenge der Änderungsdaten in einer Datenanalyse der veränderten Referenzantwortdaten zu bestimmen.

5. Authentifizierungsvorrichtung (200) nach mindestens einem der Ansprüche 2 bis 4, **dadurch gekennzeichnet, dass**
- wenigstens eine zweite Teilmenge der Änderungsdaten frei von einer vorherigen Speicherung im elektronischen Speicher (110) vom Prozessor (203) empfangbar ist; und
- der Prozessor (203) eingerichtet ist, die wenigstens eine erste Teilmenge nach dem Abrufen aus dem elektronischen Speicher (110) zu empfangen und die veränderten Vergleichsantwortdaten, ausgehend von Vergleichsantwortdaten, den Änderungsdaten entsprechend zu bestimmen.

6. Authentifizierungsvorrichtung (200) nach mindestens einem der vorangehenden Ansprüche, **dadurch gekennzeichnet, dass** die Änderungsvorschrift mindestens eine Datenmanipulation aus der folgender Gruppe vorsieht: Umsortierung von Daten, Multiplikation von Daten mit mindestens einem Faktor und Addition von Daten.

7. Authentifizierungsvorrichtung (200) nach mindestens einem der vorangehenden Ansprüche, **dadurch gekennzeichnet, dass** das digitale Referenzkopfmodell ein dreidimensionales digitales Referenzkopfmodell und das digitale Vergleichskopfmodell ein dreidimensionales digitales Vergleichskopfmodell ausgeführt sind.

8. Authentifizierungsvorrichtung (200) nach mindestens einem der vorangehenden Ansprüche, **dadurch gekennzeichnet, dass** das digitale Referenzkopfmodell und / oder das digitale Vergleichskopfmodell ein zweidimensionales digitales Tiefenbild mit einem Farbkanal umfasst, welcher eine Tiefeninformation des zweidimensionalen digitales Tiefenbildes bereitstellt.

9. Authentifizierungsvorrichtung (200) nach mindestens einem der vorangehenden Ansprüche, **dadurch gekennzeichnet, dass** der Prozessor (203) eingerichtet ist, die Person (103) zu authentifizieren, wenn der Unterschied (208) einen vorbestimmten Schwellwert unterschreitet und andernfalls die Person (103) nicht zu authentifizieren.

10. Authentifizierungsvorrichtung (200) nach mindestens einem der vorangehenden Ansprüche, **dadurch gekennzeichnet, dass** die digitalen Referenzmerkmale (107) als Referenzmerkmalsvektor und die digitalen Vergleichsmerkmale (207) als Vergleichsmerkmalsvektor vorliegen und der Prozessor (203) eingerichtet ist, den Unterschied (208) auf der Basis einer Differenz zwischen dem Referenzmerkmalsvektor und dem Vergleichsmerkmalsvektor zu bestimmen.

11. Authentifizierungsvorrichtung (200) nach Anspruch 10, **dadurch gekennzeichnet, dass** der Prozessor (203) eingerichtet ist, einen Differenzvektor zwischen dem Referenzmerkmalsvektor und dem Vergleichsmerkmalsvektor zu bestimmen und hierbei eine Phase des Differenzvektors und / oder einen Betrag des Differenzvektors zu bestimmen.

12. Authentifizierungsvorrichtung (200) nach mindestens einem der vorangehenden Ansprüche, **dadurch gekennzeichnet, dass** das digitale Referenzkopfmodell auf einer Schätzung einer Gesichtsgeometrie der Person (103) basiert und eine dreidimensionale Oberflächengeometrie der Person (103) basierend auf der geschätzten Gesichtsgeometrie unter Verwendung von maschinellem Lernen abbildet.

13. Verfahren zum Authentifizieren einer Person (103) mittels einer Authentifizierungsvorrichtung (200) anhand eines Identifikationsdokumentes (100), mit
- Bereitstellen eines Identifikationsdokumentes (100), welches einer Person (203) zugeordnet ist;
- Bereitstellen eines Referenzmerkmalssatzes (101) in einem elektronischen Speicher (110), welcher dem Identifikationsdokument (100) zugeordnet ist, wobei der Referenzmerkmalssatz (101)
- digitale Referenzmerkmale (107) eines digitalen Referenzkopfmodells aufweist, welches ein Referenzkopfbild der Person (103) repräsentiert, und
- die digitalen Referenzmerkmale (107) veränderte Referenzantwortdaten (401) umfassen, die ausgehend von Referenzantwortdaten (400), einer Änderungsvorschrift entsprechend, gebildet und von den Referenzantwortdaten (400) verschieden sind, wobei die Referenzantwortdaten (400) eine Referenzantwort (212) eines trainierten neuronalen Netzes (205) anzeigen, das durch einen Referenzparametersatz (209) definiert ist; und
- Aufnehmen eines Kopfbildes (202) der Person (103) mittels einer Bildaufnahmeeinrichtung (201);
wobei ein Prozessor (203) der Authentifizierungsvorrichtung (200)
- ein digitales Vergleichskopfmodell (204) bestimmt, welches das aufgenommene Kopfbild (202) der Person (103) repräsentiert;
- anhand des digitalen Vergleichskopfmodells (204) einen Vergleichsmerkmalssatz (206) bestimmt, welcher digitale Vergleichsmerkmale (207) des Vergleichskopfmodells (204) umfasst;
- die digitalen Vergleichsmerkmale (207) veränderte Vergleichsantwortdaten aufweisend bestimmt, welche ausgehend von Vergleichsantwortdaten, der Änderungsvorschrift entsprechend, gebildet und von den Vergleichsantwortdaten verschieden sind, wobei die Vergleichsantwortdaten eine Vergleichsantwort (210) des trainierten neuronalen Netzes (205) anzeigen; und
- einen Unterschied (208) zwischen den digitalen Referenzmerkmalen (107) und den digitalen Vergleichsmerkmalen (207) unter Berücksichtigung der veränderten Referenzantwortdaten und der veränderten Vergleichsantwortdaten bestimmt, um die Person (103) zu authentifizieren.

14. Identifikationsdokument (100) zum Identifizieren einer Person (103), mit
- einem elektronischen Speicher (110, aufweisend einen Referenzmerkmalssatz (101) mit digitalen Referenzmerkmale (107) eines digitalen Referenzkopfmodells, welches ein Referenzkopfbild der Person (103) repräsentiert, wobei die digitalen Referenzmerkmale (107) veränderte Referenzantwortdaten (401) umfassen, die ausgehend von Referenzantwortdaten (400), einer Änderungsvorschrift entsprechend, gebildet und von den Referenzantwortdaten (400) verschieden sind, wobei die Referenzantwortdaten (400) eine Referenzantwort (212) eines trainierten neuronalen Netzes (205) anzeigen, das durch einen Referenzparametersatz (209) definiert ist; und
- einer Kommunikationsschnittstelle (120), welche eingerichtet ist, die digitalen Referenzmerkmale (107) ansprechend auf den Empfang eines Auslesesignals (104) auszugeben.

15. Verfahren (300) zum Herstellen eines Identifikationsdokumentes (100), welches einer Person (103) zugeordnet ist, mit
- Aufnehmen (301) eines Referenzkopfbildes der Person (103);
- Erzeugen (302) eines digitalen Referenzkopfmodells (211) anhand des Referenzkopfbildes der Person (103), wobei das digitale Referenzkopfmodell (211) das Referenzkopfbild der Person repräsentiert; und
- Ausführen (303) eines neuronalen Netzes (205), um einen Referenzmerkmalssatz (101) bestimmen, wobei
- der Referenzmerkmalssatz (101) digitale Referenzmerkmale (107) des digitalen Referenzkopfmodells (211) aufweist und das neuronale Netz (205) durch einen Referenzparametersatz (209) definiert ist, und
- die digitalen Referenzmerkmale (107) veränderte Referenzantwortdaten (401) umfassen, die ausgehend von Referenzantwortdaten (400), einer Änderungsvorschrift entsprechend, gebildet und von den Referenzantwortdaten (400) verschieden sind, wobei die Referenzantwortdaten (400) eine Referenzantwort (212) des trainierten neuronalen Netzes (205) anzeigen.
